**Europäisches Patentamt**

**European Patent Office**

**Office européen des brevets**

(11) Publication number: **0 100 209**
**A2**

# EUROPEAN PATENT APPLICATION

(21) Application number: **83304233.6**

(22) Date of filing: **21.07.83**

(51) Int. Cl.³: **A 01 K 31/16**

(30) Priority: **22.07.82 GB 8221212**

(43) Date of publication of application: **08.02.84**
**Bulletin 84/6**

(84) Designated Contracting States: **AT BE CH DE FR GB IT LI NL SE**

(71) Applicant: **EGGTRONICS LIMITED, Bridewell Lane, Tenterden Kent (GB)**

(72) Inventor: **East, David Alan, c/o Eggtronics Ltd. Bridewell Lane, Tenterden Kent (GB)**
Inventor: **Collins, Brian, c/o Eggtronics Ltd. Bridewell Lane, Tenterden Kent (GB)**

(74) Representative: **Sanders, Peter Colin Christopher et al, BROOKES & MARTIN High Holborn House 52/54 High Holborn, London WC1V 6SE (GB)**

(54) **Egg counting device.**

(57) In a device for counting a batch of eggs, the eggs (25) are fed sequentially one behind the other through a counting station (13). A light beam (22) is angled so that a discrete pulse (24) is produced from a light activated switch (LAS1) each time the beam is intercepted by an egg. Since only the upper sector of each egg intercepts the beam, a pulse is produced for each egg whether the eggs are contacting one another or spaced apart and regardless of their orientation.

- 1 -

TITLE:   EGG COUNTING DEVICE

This invention relates to a device for counting a batch of generally egg-shaped objects, particularly batches of eggs.

Various devices have been used for counting batches of eggs. The devices have become more complex as the number of eggs and the rate of production have increased. Battery hen farms are now of such a size that batches of over 30,000 eggs have to be counted at regular intervals. In such farms the hens are normally arranged in multi-level rows, and the eggs from each row at each level need to be counted separately. An unusually low count from a particular row may then alert the farmer to a problem in that row.

An object of the present invention is to provide a device capable of counting egg-shaped objects at high speeds and with great accuracy and reliability.

In accordance with the present invention there is provided such a device comprising means for guiding the objects sequentially one behind the other along a predetermined path, means for directing a beam of radiation across the path such that the beam is intercepted by a portion of each object moving along the path, the arrangement being such that the beam is unblanked between successive objects not only when the objects are spaced apart from one another but also when contacting one another, and means responsive to the beam of radiation for counting the interceptions.

It has been found that particularly good results are obtained if the source of radiation is located above and to one side of the path so that the beam is inclined downwardly toward the path at an angle of less than 60° and preferably at an angle of between 35° and 50° to the horizontal. In this manner only the top sector of each object intercepts the beam, the ovoid shape ensuring that the beam is unblanked between successive objects even though they may be touching one another.

By way of example only, an embodiment of the invention will now be described with reference to the accompanying drawings, in which:-

Fig. 1 is a schematic plan view of an egg counting system for battery hens,

Fig. 2 is a schematic end view of one of the egg counting stations in the system of Fig. 1,

Fig. 3 is a diagrammatic side view of a sequence of eggs passing through the device of Fig. 2, and,

Fig. 4 is a circuit diagram of the counting device.

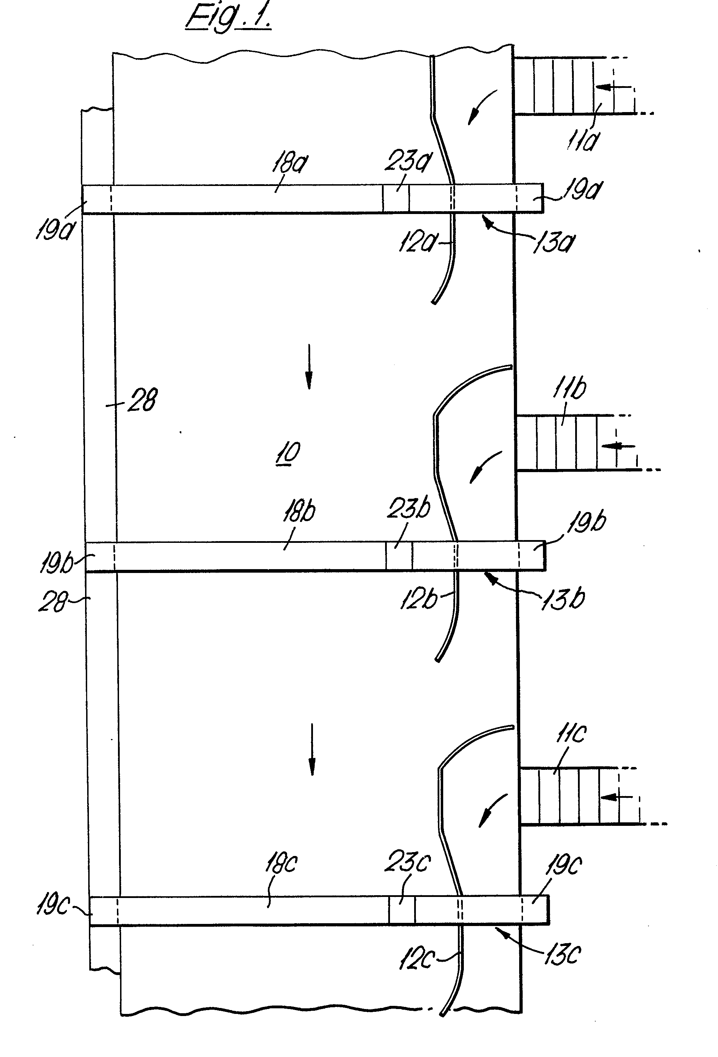

Referring first to Fig. 1, a conveyor 10 is disposed at the end of individual sub-conveyors 11a, 11b, 11c which convey eggs from respective rows of battery housed hens. The conveyor 10 can be racked up and down to collect eggs from corresponding sub-conveyors at different tiers of the battery complex.

The eggs fed on to the conveyor 10 from the sub-conveyors 11 are initially guided by means of respective sprung steel strips 12a, 12b, 12c so that they are formed into a single file as they move through respective counting stations 13.

As shown in Fig. 2, each counting station consists of a collimator 15 containing a tungsten filament light source 14 mounted above the conveyor 10, a light activated switch LAS1, and a counter 17. The collimator 15 is located to one side of the path followed by the eggs and projects downwardly at an angle $\alpha$ from a horizontal cross member 18. The angle $\alpha$ is adjusted according to the installation, and according to size of the eggs 25 being counted, but is generally less than 60° and preferably between 35° and 50°. The cross-member 18 spans the conveyor 10 and is supported at either side by uprights 19. The members 18, 19 consist of hollow trunking and carry the branch wiring 20 and electronics 23 for the respective counting station.

The light activated switch LAS1 is mounted within one of the uprights 19, the upright including an aperture 21 for the passage of light to the switch.

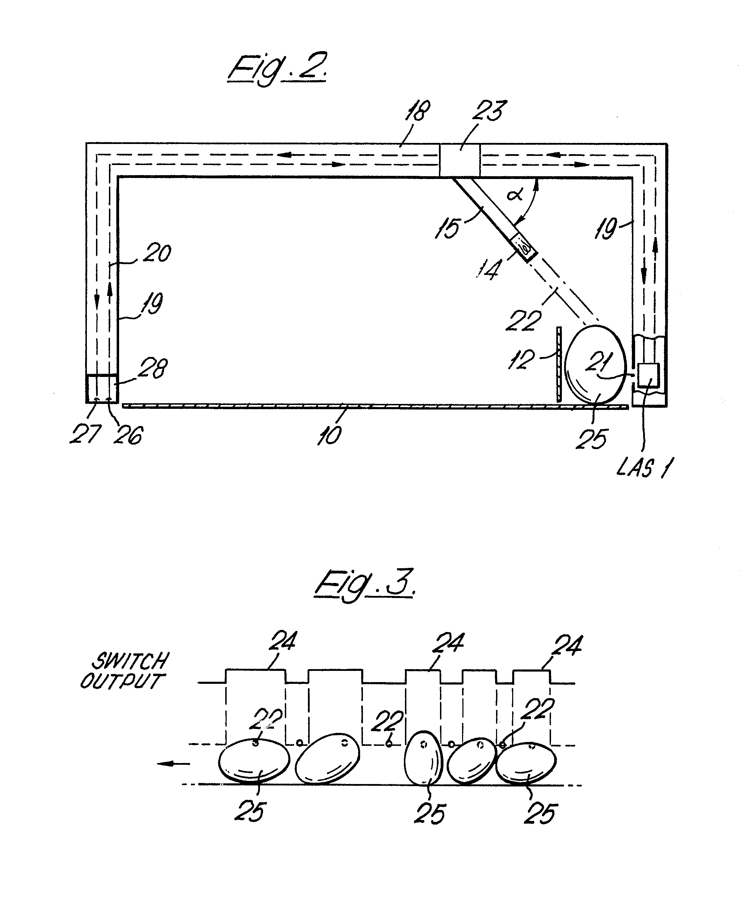

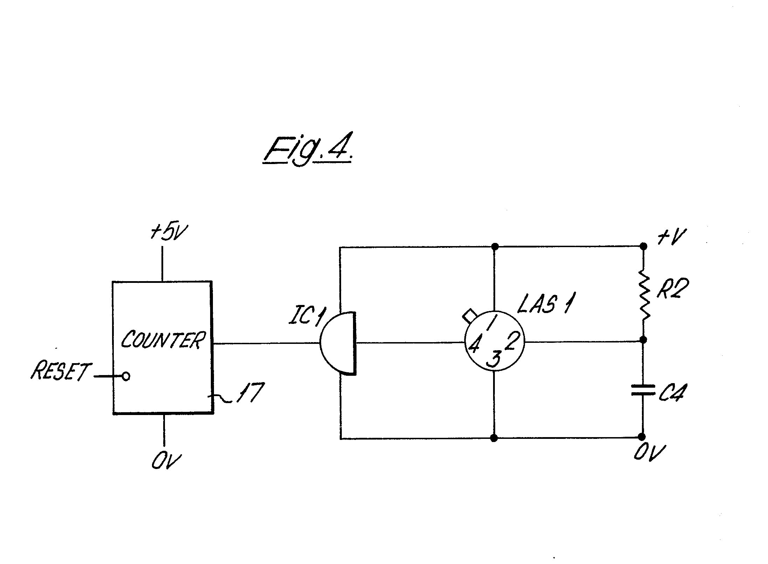

As shown in Fig. 4, a typical light activated switch LAS1 is driven from a 5V DC supply, and consists of a combined photodiode and monolithic integrated circuit. An external resistor R2 and capacitor C4 sets the light switching threshold level. When the normally incident light is brighter than the threshold level, the device switches from logic 0 to 1. The pulses generated as successive eggs pass through the light beam 22 are inverted by IC1 before being fed to the electronic counter 17. Any suitable electronic counter can be used. Power is fed in along input line 26 (Fig. 2) in trunking 28, and the output signal to the counter 17 is fed back along line 27.

Fig. 3 illustrates the effect of passing a sequence of eggs 25 through the light beam 22. The collimated light beam 22 has a diameter of about 25 mm. and intercepts a top sector of each egg so that a discrete pulse 24 is produced by the switch LAS1 for each egg regardless of whether the eggs are contacting one another or spaced apart, and regardless of the orientation of the eggs.

The illustrated device has been operated with an accuracy of better than 0.5% and, in one particular example, a batch of 32,000 eggs was counted to within $\pm$ 200.

The tungsten filament light source could be replaced by an infra-red source or by any other suitable beam of radiation.

CLAIMS

1.    A device for counting a batch of generally egg-shaped objects, the device comprising means for guiding the objects sequentially one behind the other along a predetermined path, means for directing a beam of radiation across the path such that the beam is intercepted by a portion of each object moving along the path, the arrangement being such that the beam is unblanked between successive objects not only when the objects are spaced apart from one another but also when contacting one another, and means responsive to the beam of radiation for counting the interceptions.

2.    A device according to Claim 1 in which the beam is directed such that only an upper. sector of each object intercepts the beam.

3.    A device according to Claim 2 in which the beam is inclined with respect to the said path.

4.    A device according to Claim 3 in which the path is generally horizontal and the beam is inclined downwardly toward the path at a predetermined angle to the horizontal.

5.    A device according to Claim 4 in which the angle is less than $60^{\circ}$.

6.    A device according to Claim 5 in which the angle is between $35^{\circ}$ and $50^{\circ}$.

7.    A device according to Claim 1 in which the counting means includes a sensor responsive to the radiation for producing a discrete electrical pulse in response to each interception of the beam, and a counter responsive to the output of the sensor for counting the sequence of pulses.

8.    A device for counting a batch of generally egg-shaped objects, the device being substantially as herein described with reference to the accompanying drawings.

0100209

1/3

Fig. 1.

18a    23d              19d
19a

19a                      12a        13a

28

10

18b    23b              19b
19b

19b                      12b        13b
28

18c    23c              19c
19c

19c                      12c        13c

11a

11b

11c

Fig.4.